# EUROPÄISCHE PATENTSCHRIFT

(11) **EP 4 168 155 B1**
(45) Veröffentlichungstag und Bekanntmachung des Hinweises auf die Patenterteilung: **24.04.2024**
(21) Anmeldenummer: 21729826.4
(22) Anmeldetag: 25.05.2021
(51) Int. Cl.: B01D 46/24, B01D 46/52

(54) **FILTERELEMENT, GEHÄUSE FÜR EIN FILTERSYSTEM UND FILTERSYSTEM MIT EINEM FILTERELEMENT UND EINEM GEHÄUSE**
FILTER ELEMENT, HOUSING FOR A FILTER SYSTEM, AND FILTER SYSTEM COMPRISING A FILTER ELEMENT AND A HOUSING
ÉLÉMENT FILTRANT, BOÎTIER POUR UN SYSTÈME DE FILTRAGE ET SYSTÈME DE FILTRAGE COMPRENANT UN ÉLÉMENT FILTRANT ET UN BOÎTIER

(30) Priorität: 22.06.2020 DE 102020116398
(43) Veröffentlichungstag der Anmeldung: 26.04.2023
(73) Patentinhaber: MANN+HUMMEL GmbH, 71636 Ludwigsburg (DE)
(72) Erfinder: KOHN, Kevin, 71723 Großbottwar (DE); NEEF, Pascal, 78647 Trossingen (DE)
(74) Vertreter: Mann + Hummel Intellectual Property
(86) Internationale Anmeldenummer: PCT/EP2021/063907
(87) Internationale Veröffentlichungsnummer: WO 2021/259578

(56) Entgegenhaltungen:
- DE-A1-102011 077 712
- DE-A1-102019 104 513
- DE-A1-102019 109 202
- US-A1- 2013 232 934

## Beschreibung

### Technisches Gebiet

Die Erfindung betrifft ein Filterelement, ein Gehäuse für ein Filtersystem sowie ein Filtersystem, insbesondere ein Luftfiltersystem, mit einem Filterelement und einem Gehäuse.

### Stand der Technik

Die Ansaugluft von Verbrennungsmotoren wird vor dem Eintritt in einen Brennraum des Verbrennungsmotors üblicherweise mittels eines Luftfilters von Verschmutzungen gereinigt. Hierfür eingesetzte Luftfilterelemente können ein sternförmig gefaltetes Filtermedium aufweisen, welches eine Längsachse ringförmig umgibt. Für Verbrennungsmotoren von Nutzfahrzeugen, beispielsweise schweren Lastkraftwagen, kann ein solches Filterelement eine Länge von mehr als 300 mm, insbesondere von mehr als 500 mm aufweisen. Die Filterelemente müssen sicher in ihrem Filtergehäuse befestigt sein. Da sich Filtermedien im Betrieb mit aus der Luft herausgefilterten Partikeln zusetzen, ist ein regelmäßiger Austausch der Filterelemente erforderlich.

Die DE 10 2013 014 498 A1 offenbart ein Filterelement, das einen Filterkörper in konzentrischer Form mit einer Längsachse, eine erste an einer Stirnseite angeordnete Endscheibe und eine zweite an der gegenüberliegenden Stirnseite angeordnete Endscheibe umfasst. Wenigstens eine der Endscheiben weist ein um die Längsachse angeordnetes Zentrierelement auf, welches durch ein Versteifungselement ausgesteift ist. Dadurch ist das Filterelement beim Einbau in ein Gehäuse zumindest radial zentrierbar und/oder abstützbar. Weiter weist das Zentrierelement einen Ringkörper und daran angeordnete, sich in Richtung der Längsachse erstreckende Abstützelemente auf. Die Abstützelemente sind zur axialen Abstützung des Filterelements an einer inneren Deckelkontur des Gehäuses anliegend vorgesehen. Das Filterelement weist ein Zentrierelement auf, das durch Versteifungselemente ausgesteift ist, wodurch die Biegesteifigkeit des Zentrierelements erhöht wird im Vergleich mit üblichen vorstehenden Verspannfortsätzen, wie Noppen oder ähnliche Elemente, an einer geschlossenen Filterelementendscheibe in reiner Polyurethan-Ausführung, bei der die Noppen axial verpresst oder radial nach innen umgebogen werden.

Die DE 10 2019 109 202 A1 offenbart ein Filterelement mit einem an der Endscheibe eingekerbten Filterbalg. Von der Endscheibe her ragt eine Einkerbstruktur in axialer Richtung in den Filterbalg hinein. Die Einkerbstruktur ist in axialer Richtung keilförmig ausgebildet und umfasst zwei gewölbte, in der Mitte der Einkerbstruktur aneinander stoßende Flügel, die sich symmetrisch von ihrer Kontaktfläche nach außen erstrecken. Die Einkerbstruktur der Endscheibe greift dabei in axialer Richtung zwischen zwei Falten des Filterbalgs ein und spreizt diese entsprechend in axialer Richtung keilförmig auf.

### Offenbarung der Erfindung

Eine Aufgabe der Erfindung ist es, ein Filterelement zu schaffen, das einen einfachen Austausch auch bei beengtem Bauraum ermöglicht.

Eine weitere Aufgabe der Erfindung ist die Schaffung eines Filtersystems, das einen einfachen Austausch des Filterelements ermöglicht.

Eine weitere Aufgabe der Erfindung ist die Schaffung eines Gehäuses für ein solches Filtersystem, das einen einfachen Austausch und einen lagerichtigen Einbau des Filterelements ermöglicht.

Die vorgenannte Aufgabe wird nach einem Aspekt der Erfindung gelöst von einem Filterelement nach Anspruch 1 zum Filtern eines Fluids, insbesondere eines gasförmigen Fluids, mit einer Längsachse sowie einem um die Längsachse auf einem Stützrohr angeordneten Filterbalg, der einen Innenraum umschließt, mit einem stirnseitigen ersten axialen Ende und einem diesem gegenüberliegenden stirnseitigen zweiten axialen Ende, wobei wenigstens eines der Enden eine Endscheibe aufweist, wobei der Filterbalg Falten aufweist, deren radial äußere Faltenkanten in seiner äußeren Mantelfläche liegen, wobei der Filterbalg zumindest an einem seiner stirnseitigen Enden eine Einkerbung aufweist, deren axiale Länge in Richtung der Längsachse kürzer als eine Längserstreckung des Filterbalgs in Richtung der Längsachse ist, und wobei das Stützrohr an dem zumindest einen Ende mit der Einkerbung eine radial vom Stützrohr weg gerichtete Stützstruktur mit wenigstens zwei Flügeln aufweist, welche zu beiden Seiten der Einkerbung in die Endscheibe integriert ist.

Eine weitere Aufgabe wird nach einem Aspekt der Erfindung gelöst von einem Filtersystem nach Anspruch 12, mit einem Gehäuse mit einem Fluideinlass und einem Fluidauslass und einem im Gehäuse angeordneten, wechselbaren Filterelement, wobei das Filterelement zum Filtern eines Fluids, insbesondere eines gasförmigen Fluids vorgesehen ist und eine Längsachse aufweist, mit einem um die Längsachse angeordneten Filterbalg, der einen Innenraum umschließt, mit einem stirnseitigen ersten axialen Ende und einem diesem gegenüberliegenden stirnseitigen zweiten axialen Ende, wobei wenigstens eines der Enden eine Endscheibe aufweist, wobei der Filterbalg Falten aufweist, deren radial äußere Faltenkanten in seiner äußeren Mantelfläche liegen,
wobei der Filterbalg zumindest an einem seiner stirnseitigen Enden eine Einkerbung aufweist, deren axiale Länge in Richtung der Längsachse kürzer als eine Längserstreckung des Filterbalgs in Richtung der Längsachse ist, und wobei das Stützrohr an dem zumindest einen Ende mit der Einkerbung eine radial vom Stützrohr weg gerichtete Stützstruktur mit wenigstens zwei Flügeln aufweist, welche zu beiden Seiten der Einkerbung in die jeweilige Endscheibe integriert ist.

Eine weitere Aufgabe wird nach einem Aspekt der Erfindung durch ein Gehäuse für ein Filtersystem, wobei wenigstens ein Gegenelement, insbesondere eine korrespondierende Einkerbung, an einem Gehäuseteil vorgesehen ist, das mit einer Einkerbung am Filterelement zusammenwirkt.

Günstige Ausgestaltungen und Vorteile der Erfindung ergeben sich aus den weiteren Ansprüchen, der Beschreibung und der Zeichnung.

Es wird ein Filterelement zum Filtern eines Fluids, insbesondere eines gasförmigen Fluids, vorgeschlagen, mit einer Längsachse sowie einem um die Längsachse auf einem Stützrohr angeordneten Filterbalg, der einen Innenraum umschließt, mit einem stirnseitigen ersten axialen Ende und einem diesem gegenüberliegenden stirnseitigen zweiten axialen Ende, wobei wenigstens eines der Enden eine Endscheibe aufweist. Der Filterbalg weist Falten auf, deren radial äußere Faltenkanten in seiner äußeren Mantelfläche liegen. Der Filterbalg weist zumindest an einem seiner stirnseitigen Enden eine Einkerbung auf, deren axiale Länge in Richtung der Längsachse kürzer als eine Längserstreckung des Filterbalgs in Richtung der Längsachse ist. Das Stützrohr weist an dem zumindest einen Ende mit der Einkerbung eine radial vom Stützrohr weg gerichtete Stützstruktur mit wenigstens zwei Flügeln auf, welche zu beiden Seiten der Einkerbung in die Endscheibe integriert ist.

Vorteilhaft kann das Filterelement durch die wenigstens eine Einkerbung lagerichtig verbaut werden. Die wenigstens eine Einkerbung gibt eine Positionierung des Filterelements eindeutig vor. Die Filterfläche bleibt trotz der wenigstens einen Einkerbung nahezu unverändert. Bevorzugt ist das Filterelement zum Filtern eines gasförmigen Fluids vorgesehen, vorzugsweise zum Filtern von Luft.

Die Falten des Filterbalgs werden durch die wenigstens eine Endscheibe in ihrer Position gehalten. Der Filterbalg wird an diesem Ende durch die Endscheibe abgeschlossen und abgedichtet. Die Endscheibe kann geschlossen ausgebildet sein oder zu einem Innenraum des Filterelements geöffnet ausgebildet sein. Üblicherweise weisen die Filterelemente Endscheiben an beiden Enden auf, von denen eine geschlossen und eine geöffnet ausgebildet ist. Dadurch kann das zu filternde Fluid von außen über die Mantelfläche des Filterbalgs in den Innenraum strömen. Das gefilterte Fluid kann dann aus dem Innenraum durch die offene Endscheibe wieder abströmen und das Filtersystem verlassen. Die Endscheiben Die Endscheiben können in üblicher Weise beispielsweise aus geschäumtem Polyurethan (PUR) gebildet sein.

Die Endscheibe weist eine Einkerbstruktur auf, welche der mit den Falten des Filterbalgs gebildeten Einkerbung entspricht. Mittels dieser Einkerbung kann das Filterelement in dem Gehäuse eines Filtersystems an einem korrespondierenden Gegenelement mit einer entsprechenden Einkerbung um die Längsachse lagerichtig positioniert werden. Da die Endscheibe aus PUR relativ flexibel ist, kann es bei nicht lagerichtigem Einsatz in das Gehäuse jedoch vorkommen, dass die Endscheibe durch das Gegenelement gedrückt und gebogen wird und so die Falten des Filterbalgs im Bereich der Einkerbung deformiert und beschädigt werden.

Um dieses Risiko zu minimieren ist erfindungsgemäß vorgesehen, dass eine Stützstruktur, welche an einem Stützrohr des Filterelements angeordnet ist, die Endscheibe und insbesondere die Einkerbstruktur der Endscheibe mechanisch versteift. Dadurch kann das Risiko, dass die Endscheibe bei nicht lagerichtiger Montage im Gehäuse des Filtersystems verbogen wird, reduziert werden, wodurch die Falten bei der Montage des Filterelements geschützt werden. Die Montagekraft kann dadurch in das Stützrohr geleitet werden. Die beiden Flügel der Stützstruktur können vorteilhaft so angeordnet sein, dass sie die Einkerbstruktur der Endscheibe wirksam versteifen.

Erfindungsgemäß weist das Stützrohr an dem zumindest einen Ende mit der Einkerbung einen radial nach außen gerichteten Kragen auf, an welchem die Stützstruktur angeordnet ist. Durch den Kragen kann die Endscheibe, welche üblicherweise aus einem relativ weichen flexiblen Material wie PUR ausgebildet sein kann, auf geeignete Weise versteift werden. Dadurch kann die Gefahr, dass der Filterbalg bei der Montage und/oder im Betrieb beschädigt wird, beispielsweise durch Ausüben eines zu hohen Drucks, reduziert werden. Insbesondere können die beiden Flügel der Stützstruktur mit dem radial nach außen ragenden Kragen in einer Ebene senkrecht zur Längsachse angeordnet sein. Hierdurch wird eine flache, ringförmige Struktur aus Kragen und den Flügeln der Stützstruktur ausgebildet.

Nach einer günstigen Ausgestaltung des Filterelements können die beiden Flügel der Stützstruktur symmetrisch bezüglich einer in der Längsachse verlaufenden Symmetrieebene der Einkerbung angeordnet sein. Auf diese Weise können die beiden Flügel der Stützstruktur vorteilhaft so angeordnet sein, dass sie die Einkerbstruktur der Endscheibe wirksam versteifen, da sie zu beiden Seiten der Einkerbstruktur bei der Montage eventuell auftretende Kräfte aufnehmen können.

Nach einer günstigen Ausgestaltung des Filterelements können die beiden Flügel der Stützstruktur flächenförmig ausgebildet sein und/oder eine sich nach radial außen verjüngende, insbesondere dreieckige oder trapezförmige, Gestalt aufweisen. Dadurch kann der Bereich der Endscheibe um die Einkerbstruktur wirksam versteift werden, während der restliche Bereich der Endscheibe flexibel bleibt, um die Trennung zwischen Rohfluidbereich und Reinfluidbereich im Inneren des Gehäuses des Filtersystems günstig voneinander zu trennen.

Nach einer günstigen Ausgestaltung des Filterelements können die beiden Flügel der Stützstruktur mit dem radial nach außen gerichteten Kragen in einer Ebene senkrecht zur Längsachse angeordnet sein. Hierdurch kann die Einkerbstruktur mit dem Kragen eine flache, im Bereich der Einkerbstruktur versteifte Struktur ausbilden. Die Einkerbung im Filterbalg kann stabilisiert werden, auch wenn die Einkerbstruktur nicht axial in den Filterbalg eingreift. Das Risiko, dass die Endscheibe bei nicht lagerichtiger Montage im Gehäuse des Filtersystems verbogen wird, kann reduziert werden, wodurch die Falten bei der Montage des Filterelements geschützt werden.

Nach erfindungsmäßer Ausgestaltung des Filterelements sind die beiden Flügel in der Endscheibe angrenzend an die Einkerbung angeordnet. Insbesondere können die beiden Flügel in der Endscheibe, insbesondere in dem Material der Endscheibe, beispielsweise PUR, angeordnet sein. Die Flügel können vorzugsweise beidseits möglichst eng an die Einkerbung angrenzen. Dies erlaubt eine günstige Aufnahme von Kräften durch die Flügel auch in einem üblicherweise aus einem relativ weichen flexiblen Material wie PUR, das auf diese Weise durch die an die Einkerbung angrenzenden Flügel günstig versteift werden. Dadurch kann die Gefahr, dass der Filterbalg bei der Montage und/oder im Betrieb beschädigt wird, beispielsweise durch Ausüben eines zu hohen Drucks, reduziert werden. Vorteilhaft grenzen die Flügel im Kragen der Endscheibe beidseits möglichst eng an die Einkerbung im Filterbalg.

Nach einer günstigen Ausgestaltung des Filterelements können die Flügel dazu ausgebildet sein, um die Einkerbung aufweitende Kräfte in Umfangsrichtung abzustützen und aufzunehmen. Dadurch kann die Gefahr, dass der Filterbalg bei der Montage und/oder im Betrieb beschädigt wird, beispielsweise durch Ausüben eines zu hohen Drucks, reduziert werden.

Nach einer günstigen Ausgestaltung des Filterelements kann die Stützstruktur eine Verrippung mit Durchbrechungen aufweisen. Die Verrippung kann eine günstige Steifigkeit der Stützstruktur gewährleisten, während die Durchbrechungen für eine gute Verankerung der Stützstruktur in der Endscheibe während des Herstellungsprozesses einer geschäumten PUR-Endscheibe sorgen.

Nach einer günstigen Ausgestaltung des Filterelements kann die Stützstruktur und/oder ein am Ende mit der Einkerbung radial nach außen gerichteter Kragen, an welchem die Stützstruktur angeordnet ist, Positionierrippen aufweisen, welche in Längsrichtung des Stützrohrs über eine durch die Stützstruktur und/oder den Kragen definierte Fläche zum anderen Ende des Stützrohrs hin erhaben ausgebildet sind.

Mittels der Positionierrippen kann bei der Herstellung des Filterelements ein vorgegebener axialer Abstand in Längsrichtung zwischen dem Kragen des Stützrohrs, bzw. der Stützstruktur, welche beide in der Endscheibe integriert sind, und einer Stirnfläche des Filterbalgs eingehalten werden. Dadurch kann der Filterbalg relativ zum Stützrohr während des Schäumprozesses bei der Herstellung der Endscheibe in einer festen axialen Position gehalten werden. Auf diese Weise kann verhindert werden, dass sich Luftblasen im Bereich zwischen Kragen und/oder Stützstruktur in der PUR-Endscheibe ausbilden oder in diesem Bereich haften bleiben, welche im Betrieb des Filterelements zu eventuellen Undichtigkeiten zwischen Rohbereich und Reinbereich des Filtersystems führen könnten.

Nach einer günstigen Ausgestaltung des Filterelements können die Positionierrippen parallel zueinander ausgerichtet sein. Auf diese Weise kann das Herstellungswerkzeug des Stützrohrs mit einer geeigneten Ausformrichtung günstig gestaltet werden.

Nach einer günstigen Ausgestaltung des Filterelements können die auf dem Kragen angeordneten Positionierrippen über eine Kragenfläche des Kragens verteilt angeordnet sein. Dadurch kann eine gleichmäßige Auflage der Stirnfläche des Filterbalgs auf dem Kragen gewährleistet werden. Auch ist das Risiko, dass der Filterbalg bei der Montage verkippt, dadurch reduziert.

Nach einer günstigen Ausgestaltung des Filterelements kann eine Höhe der Positionierrippen über der Fläche wenigstens eine halbe Dicke der Stützstruktur in Längsrichtung betragen. Typische Werte für eine axiale Rippenstärke der Verrippung des Kragens und/oder der Stützstruktur können im Bereich zwischen 2,5 mm und 3,0 mm liegen. Eine axiale Erhebung über die durch Kragen und/oder Stützstruktur gebildete Fläche kann demzufolge günstigerweise mindestens 1,25 mm betragen. Als sehr günstig haben sich Werte von ungefähr 2,5 mm erwiesen.

Nach einer günstigen Ausgestaltung des Filterelements können die Falten wenigstens bereichsweise durch Fixierelemente, insbesondere Fadenwickel, mit einem konstanten, insbesondere äquidistanten, Abstand zueinander gehalten sein. Das Filterelement kann weitgehend in üblicher Herstellungsweise hergestellt werden.

Nach einem weiteren Aspekt der Erfindung wird ein Filtersystem mit einem Gehäuse mit einem Fluideinlass und einem Fluidauslass und einem im Gehäuse angeordneten, wechselbaren Filterelement vorgeschlagen, wobei das Filterelement zum Filtern eines Fluids, insbesondere eines gasförmigen Fluids vorgesehen ist und eine Längsachse aufweist, mit einem um die Längsachse angeordneten Filterbalg, der einen Innenraum umschließt, mit einem stirnseitigen ersten axialen Ende und einem diesem gegenüberliegenden stirnseitigen zweiten axialen Ende, wobei wenigstens eines der Enden eine Endscheibe aufweist. Der Filterbalg weist Falten auf, deren radial äußere Faltenkanten in seiner äußeren Mantelfläche liegen. Der Filterbalg weist zumindest an einem seiner stirnseitigen Enden eine Einkerbung auf, deren axiale Länge in Richtung der Längsachse kürzer als eine Längserstreckung des Filterbalgs in Richtung der Längsachse ist. Das Stützrohr weist an dem zumindest einen Ende mit der Einkerbung eine radial vom Stützrohr weg gerichtete Stützstruktur mit wenigstens zwei Flügeln auf, welche zu beiden Seiten der Einkerbung in die jeweilige Endscheibe integriert ist.

Vorteilhaft kann das Filterelement über die korrespondierende Einkerbung insbesondere beim Einführen des Filterelements in das Gehäuse durch Reibschluss gehalten sein. Beim Einführen des Filterelements in das Gehäuse kann der Reibschluss, etwa bei schräger oder liegender Position des Filterelements einem Verkippen des Filterelements entgegenwirken. Beim Betrieb des Filterelements mit geschlossenem Gehäuse kann der Reibschluss aufgehoben sein.

Der Deckel kann das Filterelement in dem Filtergehäuse fixieren. Insbesondere kann das Filterelement in axialer Richtung zwischen einem Boden des Filtergehäuses und dem Deckel verspannt sein. Günstigerweise verläuft der Kraftfluss einer axialen Haltekraft für das Filterelement wie oben beschrieben durch ein Mittelrohr des Filterelements. Die erste Endscheibe und eine zweite Endscheibe des Filterelements können eine elastische Verformbarkeit in Längsrichtung des Filterelements einrichten, um eine definierte Haltekraft in axialer Richtung zu erhalten und ein vollständiges Schließen des Deckels zu erlauben. In radialer Richtung kann das Filterelement formschlüssig an dem Filtertopf und/oder an dem Deckel abgestützt sein.

Bevorzugt ist das Filtersystem zum Filtern eines gasförmigen Fluids vorgesehen, vorzugsweise zum Filtern von Luft. Bevorzugt ist das Filtersystem zum Einbau in ein Fahrzeug, insbesondere in ein Nutzfahrzeug, bevorzugt in ein schweres Nutzfahrzeug, vorgesehen.

Nach einer günstigen Ausgestaltung des Filtersystems können Einlass und Auslass am gleichen Gehäuseteil angeordnet sein. Dies erlaubt einen sehr kompakten Aufbau des Filtersystems.

Bei dem erfindungsgemäßen Filtersystem weist das Stützrohr an dem zumindest einen Ende mit der Einkerbung einen radial nach außen gerichteten Kragen auf, an welchem die Stützstruktur angeordnet ist.

Nach einer günstigen Ausgestaltung des Filtersystems kann die Stützstruktur und/oder ein am Ende mit der Einkerbung radial nach außen gerichteter Kragen, an welchem die Stützstruktur angeordnet ist, Positionierrippen aufweisen, welche in Längsrichtung des Stützrohrs über eine durch die Stützstruktur und/oder den Kragen definierte Fläche zum anderen Ende des Stützrohrs hin erhaben ausgebildet sind.

Mittels der Positionierrippen kann bei der Herstellung des Filterelements ein vorgegebener axialer Abstand in Längsrichtung zwischen dem Kragen des Stützrohrs, bzw. der Stützstruktur, welche beide in der Endscheibe integriert sind, und einer Stirnfläche des Filterbalgs eingehalten werden. Dadurch kann der Filterbalg relativ zum Stützrohr während des Schäumprozesses der Endscheibe in einer festen axialen Position gehalten werden. Auf diese Weise kann verhindert werden, dass sich Luftblasen im Bereich zwischen Kragen und/oder Stützstruktur in der PUR-Endscheibe ausbilden oder in diesem Bereich haften bleiben, welche im Betrieb des Filterelements zu eventuellen Undichtigkeiten zwischen Rohbereich und Reinbereich des Filtersystems führen könnten.

Nach einem weiteren Aspekt der Erfindung wird ein Gehäuse für ein Filtersystem vorgeschlagen, wobei wenigstens ein Gegenelement, insbesondere eine korrespondierende Einkerbung, an einem Gehäuseteil vorgesehen ist, das mit einer Einkerbung am Filterelement zusammenwirkt.

Günstigerweise kann ein Filterelement in schräger oder liegender Position in das Gehäuse lagerichtig positioniert werden und vor einem Verkippen geschützt werden. Dies ist insbesondere bei großen Filterelementen, wie sie in Nutzfahrzeugen eingesetzt werden und die im beladenen Zustand ein hohes Gewicht aufweisen, vorteilhaft.

Günstigerweise kann das Gehäuse in kompakter Ausführung Einlass und Auslass am gleichen Gehäuseteil aufweisen. Ferner kann ein Reinfluidkanal im Deckel des Gehäuses angeordnet vorgesehen sein, so dass der Deckel auf der Reinseite des Filtersystems angeordnet sein kann. Dies kann bei beengten Raumverhältnissen in Nutzfahrzeugen günstig sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: ein Filterelement in isometrischer Darstellung nach einem ersten Ausführungsbeispiel der Erfindung mit aufgeweiteten Falten einer Einkerbung an einem Ende des Filterelements;
- Fig. 2: das Filterelement nach Figur 1 mit transparent dargestellter Endscheibe, welche eine am Stützrohr angeordnete Stützstruktur zeigt;
- Fig. 3: eine Draufsicht auf die transparent dargestellte Endscheibe des Filterelements nach Figur 1;
- Fig. 4: das Stützrohr mit Stützstruktur des Filterelements nach Figur 1 in isometrischer Darstellung;
- Fig. 5: eine Draufsicht auf das Stützrohr mit Stützstruktur nach Figur 4;
- Fig. 6: eine Seitenansicht eines Teils des Filterbalgs mit Stützrohr mit eingezeichnetem Ausschnitt A;
- Fig. 7: den Ausschnitt A des Filterbalgs mit Stützrohr nach Figur 6;
- Fig. 8: das Filterelement nach Figur 1 mit einem Teil des aufgeschnittenen Gehäuses des Filtersystems in isometrischer Darstellung; und
- Fig. 9: eine isometrische Ansicht eines Filtersystems nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

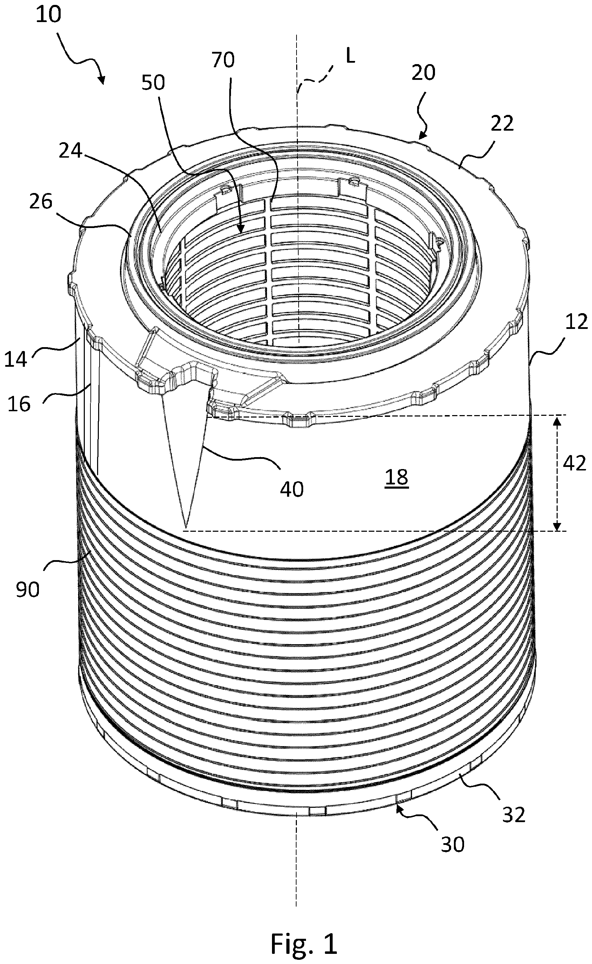

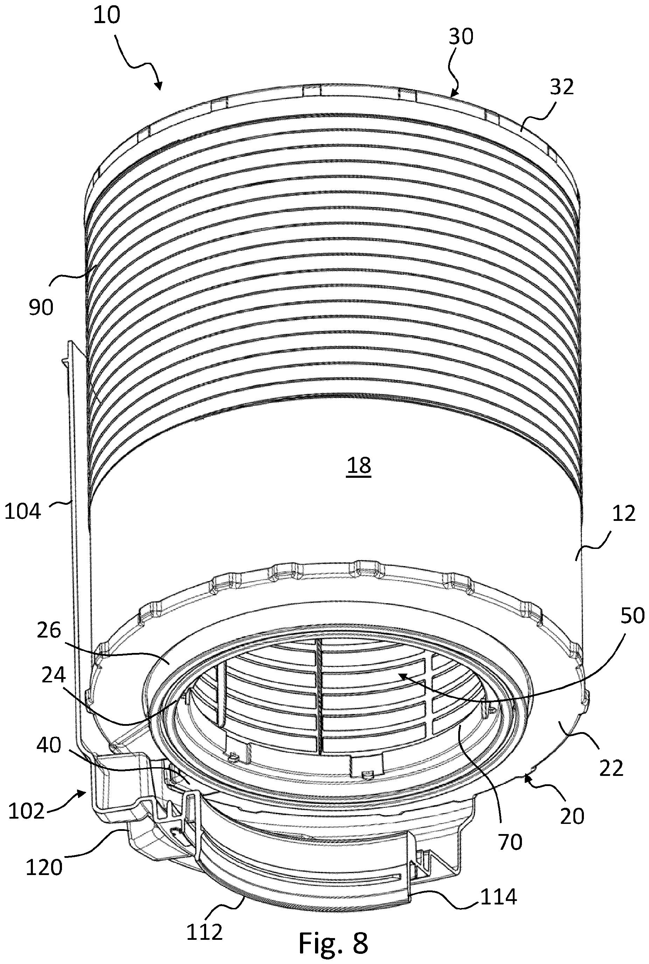

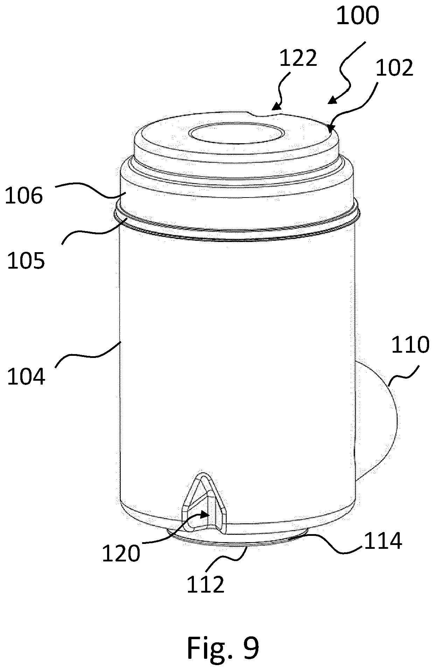

Die Figuren 1 bis 9 illustrieren ein erstes Ausführungsbeispiel der Erfindung mit einem Filterelement 10 (Figuren 1-3) und einem Filtergehäuse 102 sowie Filtersystem 100 (Figuren 8 und 9).

In Figur 1 ist das Filterelement 10 in isometrischer Darstellung nach einem ersten Ausführungsbeispiel der Erfindung mit aufgeweiteten Falten 14 einer Einkerbung 40 an einem Ende 20 des Filterelements 10 dargestellt.

Wie Figur 1 zu entnehmen ist, weist das Filterelement 10 einen Filterbalg 12 auf, der sich entlang einer Längsachse L erstreckt und einen Innenraum 50 umgibt.

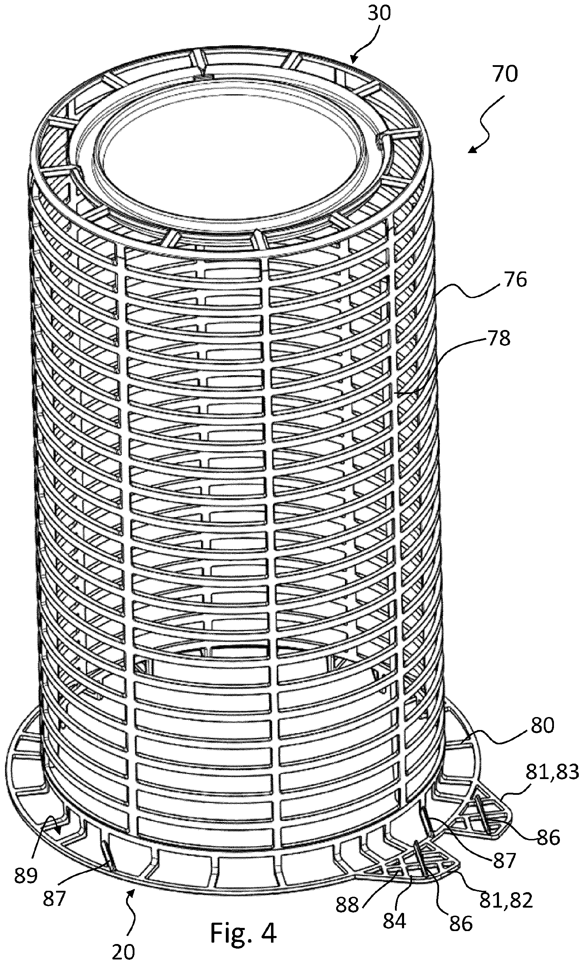

Der Filterbalg 12 ist beispielsweise aus einem gefalteten Filtermaterial gebildet, das zu einem in sich geschlossenen Filterbalg 12 gebildet und auf einem Stützrohr 70 angeordnet ist. Das Stützrohr 70 kann wenigstens eine nach innen weisende Rippe 78 aufweisen, siehe Figur 4, welche zur Versteifung des Körpers 76 des Stützrohrs 70 dient.

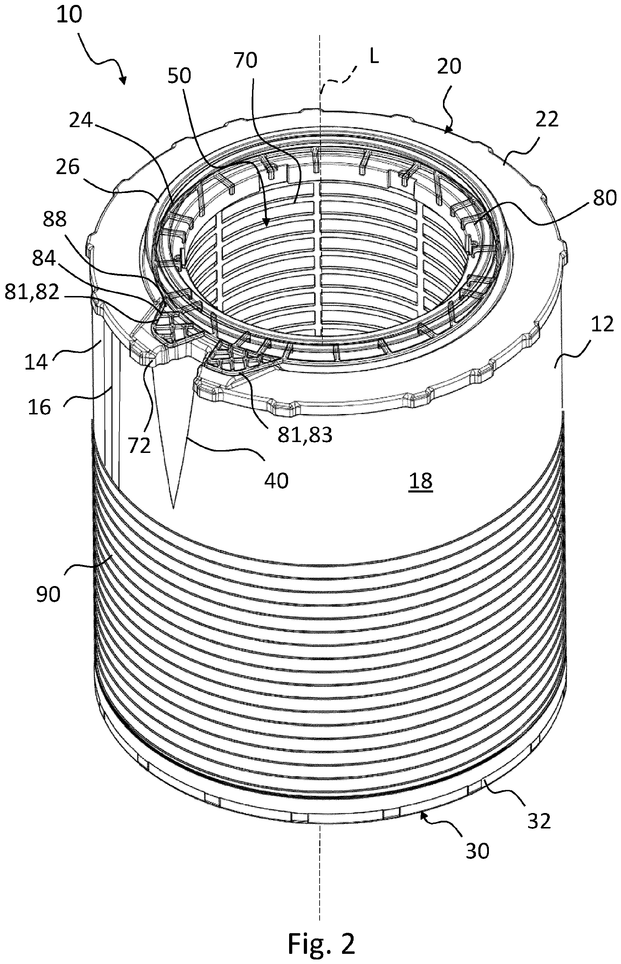

Die Falten 14 sind in den Figuren 1 und 2 lediglich beispielhaft angedeutet und erstrecken sich über die gesamte Länge des Filterbalgs 12. Die Längskanten 16 der Falten 14 liegen in einer äußeren Mantelfläche 18 des Filterbalgs 12. Der Filterbalg 12 ist in diesem Beispiel als Rundelement ausgebildet.

An einem stirnseitigen ersten Ende 20 und einem diesem gegenüberliegenden stirnseitigen zweiten Ende 30 des Filterelements 10 sind Endscheiben 22, 32 angeordnet, welche den Filterbalg 12 an seinen Stirnkanten abdichten. Die Endscheiben 22, 32 können in üblicher Weise beispielsweise aus geschäumtem Polyurethan gebildet sein.

Am ersten Ende 20 ist eine zum Innenraum 50 geöffnete Endscheibe 22 angeordnet. Am gegenüberliegenden zweiten Ende 30 ist eine geschlossene Endscheibe 32 angeordnet.

Die geöffnete Endscheibe 22 weist einen nach außen weisenden Ring 26 auf, der die Öffnung 24 in der Endscheibe 22 umgibt. Der Ring 26 kann als Dichtung dienen. Vorzugsweise sind Endscheibe 22 und Ring 26 einstückig ausgebildet. Insbesondere kann die Endscheibe mit dem Ring 26 aus Polyurethan gebildet sein.

Die Strömungsrichtung des zu filternden Fluids ist durch den Filterbalg 12 gerichtet. Ist dessen Reinseite innen vorgesehen, strömt das Fluid von der Außenseite des Filterbalgs 12 in den Innenraum 50 und von dort durch die Öffnung 24 aus dem Filterelement 10 hinaus. Optional kann die Durchströmungsrichtung auch umgekehrt vorgesehen sein.

Der Filterbalg 12 weist an seinem ersten Ende 20 eine Einkerbung 40 auf, deren axiale Länge 42 in Richtung der Längsachse L kürzer als die Längserstreckung des Filterbalgs 12 in Richtung der Längsachse L ist. Die Einkerbung 40 ist lokal begrenzt und erstreckt sich nicht über die gesamte Länge des Faltenbalgs 12. Vorzugsweise hat die Einkerbung 40 den größten Faltenkantenabstand an der jeweiligen Endscheibe 22 und verjüngt sich mit zunehmendem Abstand von der Endscheibe 22.

Bei dem in den Figuren 1 bis 3 dargestellten Ausführungsbeispiel ist nur eine Einkerbung 40 an der ersten Endscheibe 20 zu erkennen. Jedoch kann das Filterelement 10 optional auch an der zweiten Endscheibe 30 eine in dieser Darstellung nicht sichtbare Einkerbung aufweisen.

Die Einkerbung 40 weitet den Abstand zwischen zwei benachbarten Falten auf, wobei die Falten 14 sich insgesamt über die gesamte Länge des Faltenbalgs 12 erstrecken.

Vorzugsweise sind zwei an den Endscheiben einander gegenüber liegende Einkerbungen 40 am Umfang versetzt angeordnet, beispielsweise um 180° versetzt auf diametral gegenüberliegenden Seiten des Faltenbalgs 12. Die Einkerbungen 40 können auch um andere Winkel als 180° gegeneinander versetzt sein.

Zwischen den Einkerbungen 40 können Fixierelemente 90 vorgesehen sein, welche gewährleisten, dass in diesem Bereich der Abstand zwischen den Falten 14 konstant gehalten ist. Es können optional übliche Fixierelemente 90 wie Fadenwickel, Leimraupen, Raupen von Schmelzklebstoff, Prägungen ("Pleatlock") quer zu den Längskanten 16 der Falten 14 und dergleichen vorgesehen sein.

Die Einkerbungen 40 können auf unterschiedliche Weise erzeugt werden. Sie können in den Filterbalg 12 eingebracht werden, nachdem die optionalen Fixierelemente 90 bereits angebracht wurden. Die Einkerbungen 40 können beim Herstellen der Endscheiben 22, 32 in den Filterbalg 12 eingebracht werden oder durch Einlegeteile oder Spreizelemente am Stützrohr und dergleichen. Die beiden Einkerbungen 40 am Filterbalg 12 können auf gleiche Weise oder mit unterschiedlichen Methoden gebildet werden.

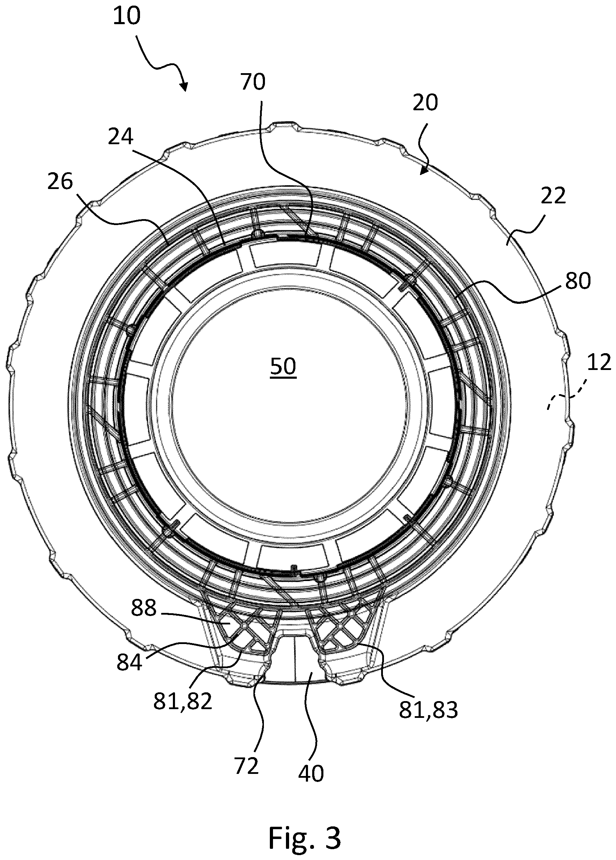

In Figur 2 ist das Filterelement 10 nach Figur 1 mit transparent dargestellter Endscheibe 20 dargestellt, welche die eine am Stützrohr 70 angeordnete Stützstruktur 81 zeigt. In Figur 3 ist eine Draufsicht auf die transparent dargestellte Endscheibe 20 des Filterelements 10 zu sehen.

Das Stützrohr 70 weist an dem einen Ende 20 mit der Einkerbung 40 eine radial vom Stützrohr 70 weg gerichtete Stützstruktur 81 mit zwei Flügeln 82, 83 auf, welche zu beiden Seiten der Einkerbung 40 in die jeweilige Endscheibe 22, 32 integriert ist. Das Stützrohr 70 weist dabei an dem einen Ende 20 mit der Einkerbung 40 einen radial nach außen gerichteten Kragen 80 auf, an welchem die Stützstruktur 81 angeordnet ist. Die beiden Flügel 82, 83 der Stützstruktur 81 sind symmetrisch bezüglich einer in der Längsachse L verlaufenden Symmetrieebene der Einkerbung 40 angeordnet. Die beiden Flügel 82, 83 der Stützstruktur 81 sind flächenförmig ausgebildet und weisen eine sich nach radial außen verjüngende, trapezförmige Gestalt auf. Alternativ können die Flügel 82, 83 beispielsweise auch dreieckförmig ausgestaltet sein. Zur mechanischen Aussteifung weist die Stützstruktur 81 eine Verrippung 84 mit Durchbrechungen 88 auf.

Die Stützstruktur 81, welche an einem Stützrohr 70 des Filterelements 10 angeordnet ist, versteift die Endscheibe 20 und insbesondere die Einkerbstruktur 72 der Endscheibe 20 mechanisch. Dadurch kann das Risiko, dass die Endscheibe 20 bei nicht lagerichtiger Montage im Gehäuse 102 des Filtersystems 100 verbogen wird, reduziert werden, wodurch die Falten 14 bei der Montage des Filterelements 10 geschützt werden. Die Montagekraft kann dadurch in das Stützrohr 70 geleitet werden. Die beiden Flügel 82, 83 der Stützstruktur 81 können vorteilhaft so angeordnet sein, dass sie die Einkerbstruktur 72 der Endscheibe 20 gegen mechanischen Druck bei der Montage des Filterelements 10 im Gehäuse 102 des Filtersystems 100 wirksam versteifen.

Insbesondere sind die beiden Flügel 82, 83 der Stützstruktur 81 mit dem radial nach außen gerichteten Kragen 80 in einer Ebene senkrecht zur Längsachse L angeordnet. Die Flügel 82, 83 ragen nicht axial in den Filterbalg 12, sondern befinden sich auf der Höhe der Endscheibe 22.

Die beiden Flügel 82, 83 sind in der Endscheibe 22 möglichst eng angrenzend an die Einkerbung 40 angeordnet. Die Flügel 82, 83 sind dazu ausgebildet, Kräfte, welche die Einkerbung 40 aufweiten, in Umfangsrichtung abzustützen und aufzunehmen. Die Verrippung 84 der Flügel 82, 83 versteift diese hierzu vorteilhaft.

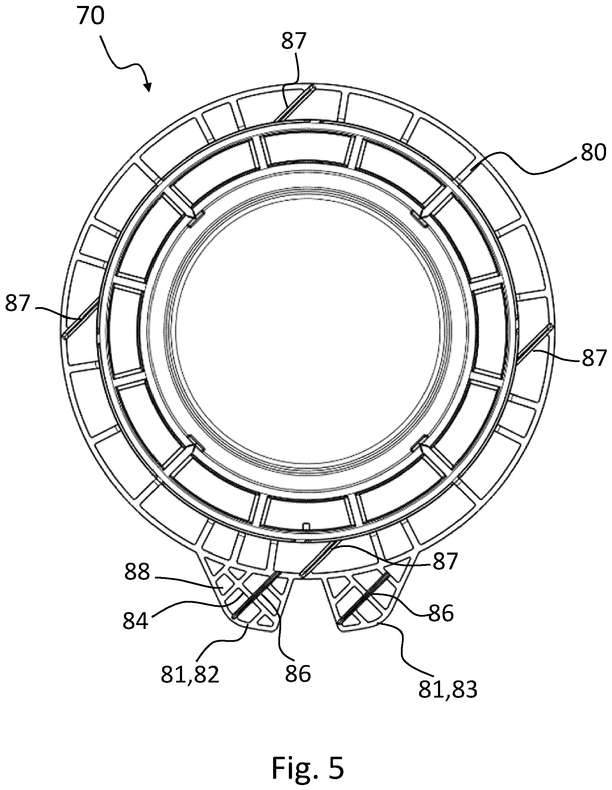

Figur 4 zeigt das Stützrohr 70 mit Stützstruktur 81 in isometrischer Darstellung, während in Figur 5 eine Draufsicht auf das Stützrohr 70 mit Stützstruktur 81 dargestellt ist. In diesen Darstellungen ist der am Ende des Stützrohrs 70 sich nach radial außen erstreckende umlaufende Kragen 80 mit den daran angeordneten Flügeln 82, 83 der Stützstruktur 81 zu erkennen. Die flache ringförmige Anordnung von Kragen 80 und Flügeln 82, 83 ist ebenso gut zu erkennen. Die Flügel 82, 83 der Stützstruktur 81 erstrecken sich im Wesentlichen in radialer Richtung.

Weiter ist in den Figuren 4 und 5 zu erkennen, dass die Stützstruktur 81 und der am Ende 20 mit der Einkerbung 40 radial nach außen gerichtete Kragen 80, an welchem die Stützstruktur 81 angeordnet ist, Positionierrippen 86, 87 aufweisen. Die Positionierrippen 86,87 sind in Längsrichtung L des Stützrohrs 70 über eine durch die Stützstruktur 81 und den Kragen 80 definierte Fläche 89 zum anderen Ende 30 des Stützrohrs 70 hin erhaben ausgebildet.

Mittels der Positionierrippen 86, 87 kann bei der Herstellung des Filterelements 10 ein vorgegebener axialer Abstand in Längsrichtung L zwischen dem Kragen 80 des Stützrohrs 70, bzw. der Stützstruktur 81, welche beide in der Endscheibe 20 integriert sind, und einer Stirnfläche des Filterbalgs 12 eingehalten werden. Dadurch kann der Filterbalg 12 relativ zum Stützrohr 70 während des Schäumprozesses bei der Herstellung der Endscheibe 20 in einer festen axialen Position gehalten werden. Auf diese Weise kann verhindert werden, dass sich Luftblasen im Bereich zwischen Kragen 80 und/oder Stützstruktur 81 in der PUR-Endscheibe 20 ausbilden oder in diesem Bereich haften bleiben, welche im Betrieb des Filterelements 10 zu eventuellen Undichtigkeiten zwischen Rohbereich und Reinbereich des Filtersystems 100 führen könnten.

Wie insbesondere in Figur 5 zu erkennen ist, sind die Positionierrippen 86, 87 parallel zueinander ausgerichtet. Auf diese Weise kann das Herstellungswerkzeug des Stützrohrs 70 mit einer geeigneten Ausformrichtung günstig gestaltet werden.

Die auf dem Kragen 80 angeordneten Positionierrippen 87 sind über eine Kragenfläche des Kragens 80 verteilt angeordnet. Dadurch kann eine gleichmäßige Auflage der Stirnfläche des Filterbalgs 12 auf dem Kragen 80 gewährleistet werden. Auch ist das Risiko, dass der Filterbalg 12 bei der Montage verkippt, dadurch reduziert.

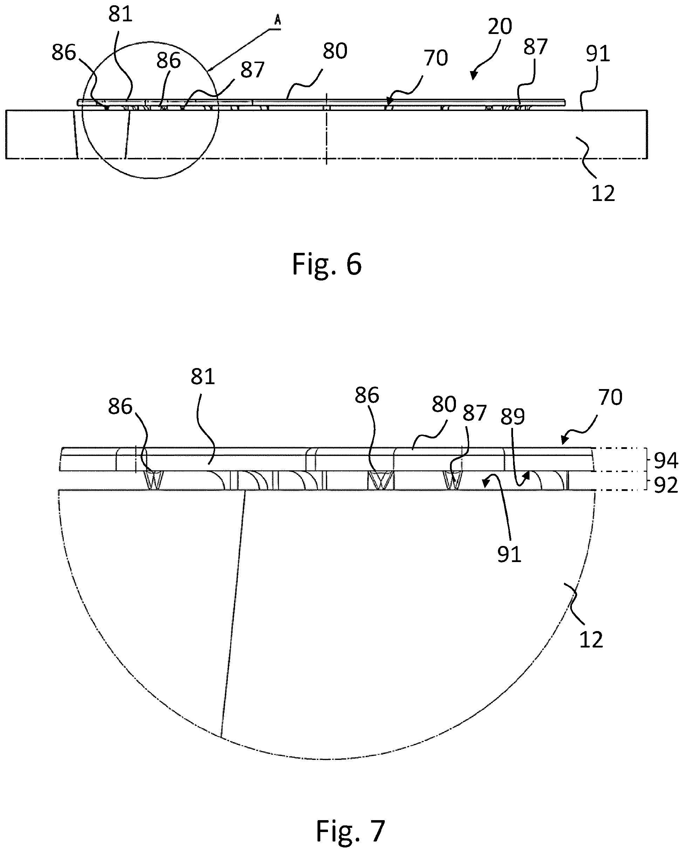

Figur 6 zeigt eine Seitenansicht eines Teils des Filterbalgs 12 mit Stützrohr 70 mit eingezeichnetem Ausschnitt A. Figur 7 zeigt dazu den Ausschnitt Ades Filterbalgs 12 mit Stützrohr 70 nach Figur 6.

Der Filterbalg 12 ist abgeschnitten dargestellt. Aus dem Inneren des Filterbalgs 12 ragt das Ende 20 des Stützrohrs 70 mit dem daran angeordneten Kragen 80 und der Stützstruktur 81 heraus. In dem Spalt zwischen Kragen 80 und Filterbalg ist insbesondere in Figur 7 zu erkennen, dass durch die an dem Kragen 80 und an der Stützstruktur 81 angeordneten Positionierrippen 86, 87 ein vorgegebener Abstand zwischen dem Kragen 80 bzw. der Stützstruktur 81 und der Stirnseite 91 des Filterbalgs 12 eingestellt werden kann.

Eine Höhe 92 der Positionierrippen 87 über der Fläche 89 kann günstigerweise wenigstens eine halbe Dicke 94 der Stützstruktur 81 in Längsrichtung L betragen, um genügend Abstand zwischen der Fläche 89 und der Stirnfläche 91 des Filterbalgs 12 einzustellen, sodass beim Herstellungsprozess der Endscheibe 22 keine Luftblasen zwischen Kragen 80 und Filterbalg 12 gefangen werden. Typische Werte für eine axiale Rippenstärke der Verrippung 84 des Kragens 80 und/oder der Stützstruktur 81 können im Bereich zwischen 2,5 mm und 3,0 mm liegen. Eine axiale Erhebung über die durch Kragen 80 und/oder Stützstruktur 81 gebildete Fläche 89 kann demzufolge günstigerweise mindestens 1,25 mm betragen. Als sehr günstig haben sich Werte von ungefähr 2,5 mm erwiesen.

In Figur 8 ist das Filterelement 10 mit einem Teil des aufgeschnittenen Gehäuses 102 des Filtersystems 100 dargestellt. Das Gehäuseteil 104 ist als Viertelsegment dargestellt, um das im Gehäuseteil 104 angeordnete Gegenelement 120 zur Einkerbung 40 des Filterelements 10 zu zeigen. Dieses Gegenelement 120 könnte bei nicht lagegerechter Montage des Filterelements, beispielsweise einer Verdrehung um die Längsachse L, auf die Endscheibe 22 eine Kraft ausüben, welche zu einer Verformung der Falten 14 des Filterbalgs 12 im Bereich der Einkerbung 40 führen könnte. Die Einkerbung 40 des Filterelements 10 ist in dieser Darstellung durch das Gegenelement 120 des Gehäuseteils 104 verdeckt und deshalb nicht zu erkennen.

Figur 9 zeigt eine isometrische Ansicht eines Filtersystems 100 nach einem Ausführungsbeispiel der Erfindung. In der montierten Anordnung des Filtersystems 100 sind die beiden Gehäuseteile 104, 106 an dem Verbindungsbereich 105 gefügt, beispielsweise verschraubt. Mit dem als Deckel ausgebildeten Gehäuseteil 106 kann das Filtersystem 100 nach eingesetztem Filterelement 10 verschlossen werden. Einlass 110 und Auslass 112 des Gehäuses 102 sind am gleichen Gehäuseteil 104 angeordnet, wobei der Einlass für eine radiale Anströmung des Filterelements 10 ausgebildet ist, während der Auslass 112 das Reinfluid in Längsrichtung ausströmen lässt. Der Auslass 112 ist in einen Stutzen 114 des Gehäuseteils 104 integriert. Im Gehäuseteil 104 ist benachbart zu dem Auslass 112 das Gegenelement 120 zu der Einkerbung 40 des Filterelements 10 zu erkennen, mittels dessen das Filterelement 10 in einer vorgegebenen Orientierung um die Längsachse L positioniert werden kann. Das Gegenelement 120 ist in dem Gehäuseteil 104 als korrespondierende Einkerbung ausgebildet, welche mit der Einkerbung 40 am Filterelement 10 in geeigneter Weise zusammenwirkt.

Ebenso ist im Gehäuseteil 106 ein Gegenelement 122 zu einer weiteren Einkerbung des Filterelements 10 zu erkennen, mittels dessen das Filterelement 10 in einer vorgegebenen Orientierung um die Längsachse L positioniert werden kann. Das Gegenelement 122 ist in dem Gehäuseteil 106 als korrespondierende Einkerbung ausgebildet, welche mit der entsprechenden Einkerbung am Filterelement 10 in geeigneter Weise zusammenwirkt.

### Bezugszeichen

- 10: Filterelement
- 12: Filterbalg
- 14: Falten
- 16: Faltenkanten
- 18: Mantelfläche
- 20: erstes Ende
- 22: Endscheibe
- 24: Öffnung in Endscheibe
- 26: Dichtung Ring
- 30: zweites Ende
- 32: Endscheibe
- 40: Einkerbung
- 42: Länge
- 50: Innenraum
- 70: Stützrohr
- 71: Flügel
- 72: Einkerbstruktur
- 76: Körper
- 78: Innenrippe
- 80: Kragen
- 81: Stützstruktur
- 82: Flügel
- 83: Flügel
- 84: Verrippung
- 86: Positionierrippe
- 87: Positionierrippe
- 88: Durchbrechung
- 89: Fläche
- 90: Fixierelement
- 91: Stirnseite
- 92: Höhe
- 94: Dicke
- 100: Filtersystem
- 102: Gehäuse
- 104: Gehäuseteil
- 105: Verbindung
- 106: Gehäuseteil
- 110: Einlass
- 112: Auslass
- 114: Stutzen
- 120: Gegenelement zur Einkerbung
- 122: Gegenelement zur Einkerbung
- L: Längsachse

## Patentansprüche

1. Filterelement (10) zum Filtern eines Fluids, insbesondere eines gasförmigen Fluids, mit einer Längsachse (L) sowie einem um die Längsachse (L) auf einem Stützrohr (70) angeordneten Filterbalg (12), der einen Innenraum (50) umschließt, mit einem stirnseitigen ersten axialen Ende (20) und einem diesem gegenüberliegenden stirnseitigen zweiten axialen Ende (30), wobei wenigstens eines der Enden (20, 30) eine Endscheibe (22, 32) aufweist, wobei der Filterbalg (12) Falten (14) aufweist, deren radial äußere Faltenkanten (16) in seiner äußeren Mantelfläche (18) liegen,
wobei der Filterbalg (12) zumindest an einem seiner stirnseitigen Enden (20, 30) eine Einkerbung (40) aufweist, deren axiale Länge (42) in Richtung der Längsachse (L) kürzer als eine Längserstreckung des Filterbalgs (12) in Richtung der Längsachse (L) ist, und
wobei das Stützrohr (70) an dem zumindest einen Ende (20, 30) mit der Einkerbung (40) eine radial vom Stützrohr (70) weg gerichtete Stützstruktur (81) mit wenigstens zwei Flügeln (82, 83) aufweist, welche zu beiden Seiten der Einkerbung (40) in die Endscheibe (22, 32) integriert ist, wobei das Stützrohr (70) an dem zumindest einen Ende (20, 30) mit der Einkerbung (40) einen radial nach außen gerichteten Kragen (80) aufweist, an welchem die Stützstruktur (81) angeordnet ist, und wobei die beiden Flügel (82, 83) in dem Material der Endscheibe (22, 32) angrenzend an die Einkerbung (40) angeordnet sind.

2. Filterelement nach Anspruch 1, wobei die beiden Flügel (82, 83) der Stützstruktur (81) symmetrisch bezüglich einer in der Längsachse (L) verlaufenden Symmetrieebene der Einkerbung (40) angeordnet sind.

3. Filterelement nach einem der vorhergehenden Ansprüche, wobei die beiden Flügel (82, 83) der Stützstruktur (81) flächenförmig ausgebildet sind und/oder eine sich nach radial außen verjüngende, insbesondere dreieckige oder trapezförmige, Gestalt aufweisen.

4. Filterelement nach einem der vorhergehenden Ansprüche, wobei die beiden Flügel (82, 83) der Stützstruktur (81) mit dem radial nach außen gerichteten Kragen (80) in einer Ebene senkrecht zur Längsachse (L) angeordnet sind.

5. Filterelement nach einem der vorhergehenden Ansprüche, wobei die Flügel (82, 83) dazu ausgebildet sind, Kräfte, welche die Einkerbung (40) aufweiten, in Umfangsrichtung abzustützen und aufzunehmen.

6. Filterelement nach einem der vorhergehenden Ansprüche, wobei die Stützstruktur (81) eine Verrippung (84) mit Durchbrechungen (88) aufweist.

7. Filterelement nach einem der vorhergehenden Ansprüche, wobei die Stützstruktur (81) und/oder ein am Ende (20, 30) mit der Einkerbung (40) radial nach außen gerichteter Kragen (80), an welchem die Stützstruktur (81) angeordnet ist, Positionierrippen (86, 87) aufweisen, welche in Längsrichtung (L) des Stützrohrs (70) über eine durch die Stützstruktur (81) und/oder den Kragen (80) definierte Fläche (89) zum anderen Ende (30, 20) des Stützrohrs (70) hin erhaben ausgebildet sind.

8. Filterelement nach Anspruch 7, wobei die Positionierrippen (86, 87) parallel zueinander ausgerichtet sind.

9. Filterelement nach Anspruch 7 oder 8, wobei die auf dem Kragen (80) angeordneten Positionierrippen (87) über eine Kragenfläche des Kragens (80) verteilt angeordnet sind.

10. Filterelement nach einem der Ansprüche 7 bis 9, wobei eine Höhe (92) der Positionierrippen (87) über der Fläche (89) wenigstens eine halbe Dicke (94) der Stützstruktur (81) in Längsrichtung (L) beträgt.

11. Filterelement nach einem der vorhergehenden Ansprüche, wobei die Falten (14) wenigstens bereichsweise durch Fixierelemente (90), insbesondere Fadenwickel, mit einem konstanten, insbesondere äquidistanten, Abstand zueinander gehalten sind.

12. Filtersystem (100) mit einem Gehäuse (102) mit einem Fluideinlass (110) und einem Fluidauslass (112) und einem im Gehäuse (102) angeordneten, wechselbaren Filterelement (10) nach einem der vorhergehenden Ansprüche.

13. Filtersystem nach Anspruch 12, wobei die Stützstruktur (81) und/oder ein am Ende (20, 30) mit der Einkerbung (40) radial nach außen gerichteter Kragen (80), an welchem die Stützstruktur (81) angeordnet ist, Positionierrippen (86, 87) aufweisen, welche in Längsrichtung (L) des Stützrohrs (70) über eine durch die Stützstruktur (81) und/oder den Kragen (80) definierte Fläche (89) zum anderen Ende (30, 20) des Stützrohrs (70) hin erhaben ausgebildet sind.

## Claims

1. A filter element (10) for filtering a fluid, in particular a gaseous fluid, having a longitudinal axis (L) as well as a filter bellows (12) disposed around the longitudinal axis (L) on a support tube (70) and which encloses an interior space (50), having a first frontal axial end (20) and a second frontal axial end (30) opposite said first frontal axial end, wherein at least one of the ends (20, 30) features an end disc (22, 32), wherein the filter bellows (12) features folds (14), the radially outer fold edges (16) of which lie in its outer circumferential surface (18),
wherein the filter bellows (12) features, on at least one of its front ends (20, 30), a notch (40), the axial length (42) of which in the direction of the longitudinal axis (L) is shorter than a longitudinal extension of the filter bellows (12) in the direction of the longitudinal axis (L), and
wherein the support tube (70) features, at the at least one end (20, 30), with the notch (40) a support structure (81) having at least two wings (82, 83) which is directed radially away from the support tube (70) and which is integrated into the end disc (22, 32) on both sides of the notch (40), wherein the support tube (70) features, at the at least one end (20, 30), with the notch (40) a radially outwardly directed collar (80), on which the support structure (81) is disposed, and wherein the two wings (82, 83) are disposed in the material of the end disc (22, 32) adjacent to the notch (40).

2. The filter element according to claim 1, wherein the two wings (82, 83) of the support structure (81) are disposed symmetrically with respect to a symmetry plane of the notch (40) extending in the longitudinal axis (L).

3. The filter element according to one of the preceding claims, wherein the two wings (82, 83) of the support structure (81) have a planiform design and/or feature a radially outwardly tapering, in particular triangular or trapezoidal, shape.

4. The filter element according to one of the preceding claims, wherein the two wings (82, 83) of the support structure (81) are disposed, with the radially outwardly directed collar (80), in a plane perpendicular to the longitudinal axis (L).

5. The filter element according to one of the preceding claims, wherein the wings (82, 83) are designed to support and accommodate forces which widen the notch (40) in the circumferential direction.

6. The filter element according to one of the preceding claims, wherein the support structure (81) features a ribbing (84) with apertures (88).

7. The filter element according to one of the preceding claims, wherein the support structure (81) and/or a collar (80) directed radially outwardly at the end (20, 30) with the notch (40) and on which the support structure (81) is disposed, feature positioning ribs (86, 87) which are designed to be raised in the longitudinal direction (L) of the support tube (70) on a surface (89) defined by the support structure (81) and/or the collar (80) towards the other end (30, 20) of the support tube (70).

8. The filter element according to claim 7, wherein the positioning ribs (86, 87) are aligned parallel to each other.

9. The filter element according to claim 7 or 8, wherein the positioning ribs (87) disposed on the collar (80) are distributed across a collar surface of the collar (80).

10. The filter element according to one of the claims 7 to 9, wherein a height (92) of the positioning ribs (87) over the surface (89) is at least half a thickness (94) of the support structure (81) in longitudinal direction (L).

11. The filter element according to one of the preceding claims, wherein the folds (14) are held at least in some areas at a constant, in particular equidistant, distance from one another by fixing elements (90), in particular by thread winding.

12. A filter system (100) having a housing (102) with a fluid inlet (110) and a fluid outlet (112) and an exchangeable filter element (10) disposed in the housing (102) according to one of the preceding claims.

13. The filter system according to claim 12, wherein the support structure (81) and/or a collar (80) directed radially outwardly at the end (20, 30) with the notch (40) and on which the support structure (81) is disposed, feature positioning ribs (86, 87) which are designed to be raised in the longitudinal direction (L) of the support tube (70) on a surface (89) defined by the support structure (81) and/or the collar (80) towards the other end (30, 20) of the support tube (70).

## Revendications

1. Elément filtrant (10) destiné à filtrer un fluide, notamment un fluide gazeux, ayant un axe longitudinal (L) ainsi qu'un soufflet de filtre (12) disposé autour de l'axe longitudinal (L) sur un tube de support (70), qui entoure un espace intérieur (50), ayant une première extrémité axiale frontale (20) et une seconde extrémité axiale frontale (30) opposée à celle-ci, au moins l'une des extrémités (20, 30) présentant un disque d'extrémité (22, 32), le soufflet de filtre (12) présentant des plis (14) dont les bords de plis radialement extérieurs (16) se trouvent dans sa surface circonférentielle extérieure (18),
le soufflet de filtre (12) présentant au moins à l'une de ses extrémités frontales (20, 30) une encoche (40) dont la longueur axiale (42) en direction de l'axe longitudinal (L) est plus courte qu'une extension longitudinale du soufflet de filtre (12) en direction de l'axe longitudinal (L), et
le tube de support (70) présentant, à l'extrémité (20, 30), au moins au nombre d'une, avec l'encoche (40) une structure de support (81) orientée radialement en s'éloignant du tube de support (70), avec au moins deux ailes (82, 83) et qui est intégrée dans le disque d'extrémité (22, 32) des deux côtés de l'encoche (40), le tube de support (70) présentant à l'extrémité (20, 30), au moins au nombre d'une, avec l'encoche (40), une collerette (80) orientée radialement vers l'extérieur, sur laquelle est disposée la structure de support (81), et les deux ailes (82, 83) étant disposées dans le matériau du disque d'extrémité (22, 32), de manière adjacente à l'encoche (40).

2. Elément filtrant selon la revendication 1, dans lequel les deux ailes (82, 83) de la structure de support (81) sont disposées symétriquement par rapport à un plan de symétrie de l'encoche (40) s'étendant selon l'axe longitudinal (L).

3. Elément filtrant selon l'une quelconque des revendications précédentes, les deux ailes (82, 83) de la structure de support (81) étant réalisées de manière planiforme et/ou présentant une forme se rétrécissant radialement vers l'extérieur, notamment de forme triangulaire ou trapézoïdale.

4. Elément filtrant selon l'une quelconque des revendications précédentes, les deux ailes (82, 83) de la structure de support (81) étant disposées avec la collerette (80) orientée radialement vers l'extérieur dans un plan perpendiculaire à l'axe longitudinal (L).

5. Elément filtrant selon l'une quelconque des revendications précédentes, les ailes (82, 83) étant réalisées pour supporter et recevoir des forces qui élargissent l'encoche (40) dans le sens circonférentiel.

6. Elément filtrant selon l'une quelconque des revendications précédentes, la structure de support (81) présentant un nervurage (84) ayant des percements (88).

7. Elément filtrant selon l'une quelconque des revendications précédentes, la structure de support (81) et/ou une collerette (80) orientée radialement vers l'extérieur à l'extrémité (20, 30) comportant l'encoche (40) et sur laquelle est disposée la structure de support (81), présentant des nervures de positionnement (86, 87) réalisées en relief dans la direction longitudinale (L) du tube de support (70) sur une surface (89) définie par la structure de support (81) et/ou la collerette (80) vers l'autre extrémité (30, 20) du tube de support (70).

8. Elément filtrant selon la revendication 7, les nervures de positionnement (86, 87) étant orientées parallèlement les unes aux autres.

9. Elément filtrant selon la revendication 7 ou 8, les nervures de positionnement (87) disposées sur la collerette (80) étant réparties par l'intermédiaire d'une surface de la collerette (80).

10. Elément filtrant selon l'une quelconque des revendications 7 à 9, une hauteur (92) des nervures de positionnement (87) au-dessus de la surface (89) étant au moins égale à la moitié de l'épaisseur (94) de la structure de support (81) selon la direction longitudinale (L).

11. Élément filtrant selon l'une quelconque des revendications précédentes, les plis (14) étant maintenus au moins dans certaines sections par des éléments de fixation (90) notamment enroulement de fil, à une distance constante, notamment équidistante, les uns des autres.

12. Système de filtre (100) ayant un boîtier (102) avec une entrée de fluide (110) et une sortie de fluide (112) et un élément filtrant (10) échangeable, disposé dans le boîtier (102) selon l'une quelconque des revendications précédentes.

13. Système de filtre selon la revendication 12, la structure de support (81) et/ou une collerette (80) orientée radialement vers l'extérieur à l'extrémité (20, 30) comportant l'encoche (40) et sur laquelle est disposée la structure de support (81), présentant des nervures de positionnement (86, 87) réalisées en relief dans la direction longitudinale (L) du tube de support (70) sur une surface (89) définie par la structure de support (81) et/ou la collerette (80) vers l'autre extrémité (30, 20) du tube de support (70).
